# EUROPÄISCHE PATENTANMELDUNG

(11) **EP 4 210 439 A1**
(43) Veröffentlichungstag der Anmeldung: **12.07.2023**
(21) Anmeldenummer: 22150531.6
(22) Anmeldetag: 07.01.2022
(51) Int. Cl.: H05B 35/00, F21S 9/02, H01M 10/48

(54) **VERSORGUNGSEINRICHTUNG FÜR EINE NOTLEUCHTE UND AUFRÜSTEINHEIT**

(71) Anmelder: polynom ag, 5314 Kleindöttingen (CH)
(72) Erfinder: NOÉ, Michel, 5314 Kleindöttingen (CH)
(74) Vertreter: Frei Patent Attorneys

(57) **Zusammenfassung**

Eine Versorgungseinrichtung für eine Notleuchte weist auf:
- einen Akku (14), dessen Ladestrom unterbrochen werden muss, sobald seine Temperatur ausserhalb eines gewissen Temperaturbereichs liegt,
- eine elektronische Steuerung (13), aufweisend ein Ladegerät (17) für den Akku (14) und einen Microcontroller (16),
- eine mindestens zwei-farbige Status-LED (1), um den Zustand der Notleuchte anhand einer Farbe der Status-LED (1) anzuzeigen, insbesondere während eines Anzeigeintervalls,
- einen Temperatursensor (2), um eine Umgebungstemperatur des Akkus zu messen, insbesondere während eines Messintervalls,

Dabei ist der Temperatursensor (2) mit der Status-LED (1) verdrahtet, indem ein erster Steueranschluss (4) der Status-LED (1) und ein Mess-Anschluss (8) des Temperatursensors (2) eine erste Verbindung zum Microcontroller (16) gemeinsam nutzen, und ein zweiter Steueranschluss (6) der Status-LED (1) und ein Versorgungs-Anschluss (9) des Temperatursensors (2) eine zweite Verbindung zum Microcontroller (16) gemeinsam nutzen.

## Beschreibung

Die Erfindung bezieht sich auf das Gebiet der elektrischen Notleuchten. Sie bezieht sich auf eine Versorgungseinrichtung für eine Notleuchte und eine Aufrüsteinheit gemäss dem Oberbegriff der entsprechenden unabhängigen Patentansprüche.

Die Anwendung der Lithium-Ion-Technologie für Einzelbatterie-Notleuchten wurde Ende 2021 durch eine Normänderung ermöglicht. Die zwei dafür bestimmten Normen (IEC 60598-2-22: Notleuchten und IEC 61347-2-7: Elektronische Steuerungen für Notleuchten) wurden entsprechend angepasst. Da die Ladung von Li-Ion-Akkus bei zu tiefen bzw. zu hohen Akkutemperaturen gefährlich ist, wurden Sicherheitsbereiche definiert, welche von der Akku-Technologie abhängig sind (erweiterte Bereiche bei den sicheren LiFePO₄ bzw. engere Bereiche bei den gefährlicheren Li-NiO₂-CoO₂-MnO₂ Typen).

Auf jeden Fall muss die Temperatur des Akkus eruiert oder (besser) gemessen werden, um die Anforderungen der Normen zu erfüllen. Derzeit werden folgende Lösungen angewandt:
1. Ein Temperatursensor wird in den Akku eingebaut und vom Akku versorgt. Dessen Ausgangssignal wird zur elektronischen Steuerung geführt, um vom deren Microcontroller gemessen zu werden. Üblicherweise wird der Akku mit einem dreipoligen Stecker ausgerüstet (Plus, Minus und Messung) und die elektronische Steuerung entsprechend angepasst.
2. Ein Temperatursensor wird in den Akku eingebaut und vom Akku versorgt. Dieser Sensor wird auf eine elektronische Platine zusammen mit einem Funk-Modul bestückt. Die Temperaturmessung wird zur elektronischen Steuerung per Funk übermittelt, um vom deren Microcontroller gemessen zu werden. Die elektronische Steuerung muss entsprechend angepasst werden.
3. Ein Temperatursensor wird in den Akku eingebaut und vom Akku versorgt. Wenn die Akku-Temperatur ausserhalb des zugelassenen Temperaturbereichs liegt, wird die Akku-Leitung im Akku elektronisch unterbrochen, und ggf. wieder hergestellt, wenn die Temperatur wieder in Ordnung ist.
4. Ein Temperatursensor wird in die Nähe oder auf dem Li-Ion-Akku befestigt oder angebracht und von der elektronischen Steuerung versorgt. Seine Versorgung und sein für die Messung bestimmtes Ausgangssignal müssen an die elektronische Steuerung angeschlossen werden, um vom deren Microcontroller versorgt bzw. gemessen zu werden. Diese Verbindung erfolgt üblicherweise über einen speziellen Stecker, welcher sich auf der elektronischen Steuerung befindet. Die elektronische Steuerung muss dafür angepasst werden.
5. Falls sich die elektronische Steuerung und die Batterie in der Nähe oder im selben Gehäuse befinden, kann die Temperatur der elektronischen Steuerung gemessen und anhand dieser Messung die Akkutemperatur approximativ berechnet werden. Bei dieser Lösung wird entweder ein Temperatursensor auf die elektronische Steuerung eingebaut, oder der verwendete Microcontroller verfügt über eine integrierte Temperaturmessung.

### Problematik:

Es handelt sich um eine Normänderung. Bis jetzt, d.h. vor dieser Normänderung, wurden elektronische Steuerungen für Li-Ion-Akkus gebaut und in Notleuchten eingesetzt, ohne dabei die Akkutemperatur zu beachten. Um die Anforderungen der geänderten Normen zu erfüllen, ist es wünschenswert, bereits vorhandene Steuerungen und Akkus so wenig wie möglich zu ändern bzw. den Übergang zwischen der Zeit vor und nach der Normänderung so einfach wie möglich zu gestalten. Wenn zum Beispiel die Akkus unverändert bleiben könnten, müssen weder technische Unterlagen angepasst noch Lagerbestände korrigiert werden. Zudem würde damit eine Rückwärtskompatibilität gewährleistet.

Nachteile der bestehenden Lösungen:
Bei den Lösungen 1, 2 und 3 wird der Temperatursensor in den Akku eingebaut und vom Akku permanent mit Strom versorgt. Der Akku wird dadurch ständig entladen, was zu einer kürzeren Lagerzeit führt. Zudem sind die Akkus nicht mehr kompatibel mit älteren Typen (d.h. vor der Normänderung).

Bei Lösung 1 müssen der Akku und die elektronische Steuerung wesentlich geändert werden. Die Rückwärtskompatibilität wird weder bei den Akkus noch bei den elektronischen Steuerungen gewährleistet.

Lösung 2 erfordert den Einbau einer komplexen elektronischen Leiterplatte in die Batterie, was erhebliche zusätzliche Kosten verursacht. Zudem muss die elektronische Steuerung angepasst werden, um das Funksignal der Temperaturmessung-Schaltung zu empfangen.

Lösung 3 ist nicht normkonform, da die Akkuleitung sowohl beim Laden als auch beim Entladen bei zu hohen Temperaturen unterbrochen wird, was einen Notbetrieb verhindert.

Bei Lösung 4 muss die elektronische Steuerung wesentlich geändert werden, da ein zusätzlicher Stecker eingebaut werden muss. Die Rückwärtskompatibilität wird bei den elektronischen Steuerungen nicht gewährleistet.

Lösung 5 ist nicht universell einsetzbar, da der Akku und die elektronische Steuerung sich nicht immer im selben Gehäuse befinden. Zudem muss der Microcontroller fähig sein, seine Temperatur zu messen.

Fazit: Zurzeit gibt es keine optimale Lösung.

Es ist deshalb Aufgabe der Erfindung, eine Versorgungseinrichtung für eine Notleuchte und eine Aufrüsteinheit für eine Notleuchte zu schaffen, welche einen oder mehrere der oben genannten Nachteile beheben.

Diese Aufgabe lösen eine Versorgungseinrichtung für eine Notleuchte und eine Aufrüsteinheit mit den Merkmalen der entsprechenden unabhängigen Patentansprüche.

Die Versorgungseinrichtung für eine Notleuchte weist auf:
- einen Akku, dessen Ladestrom unterbrochen werden muss, sobald seine Temperatur ausserhalb eines gewissen Temperaturbereichs liegt,
- eine elektronische Steuerung, aufweisend ein Ladegerät für den Akku und einen Microcontroller,
- eine mindestens zwei-farbige Status-LED, um den Zustand der Notleuchte anhand einer Farbe der Status-LED anzuzeigen, insbesondere während eines Anzeigeintervalls,
- einen Temperatursensor, um eine Umgebungstemperatur des Akkus zu messen, insbesondere während eines Messintervalls,

Dabei ist der Temperatursensor mit der Status-LED verdrahtet, indem ein erster Steueranschluss der Status-LED und ein Mess-Anschluss des Temperatursensors eine erste Verbindung zum Microcontroller gemeinsam nutzen, und ein zweiter Steueranschluss der Status-LED und ein Versorgungs-Anschluss des Temperatursensors eine zweite Verbindung zum Microcontroller gemeinsam nutzen.

Unter dem Begriff "Umgebungstemperatur des Akkus" zu verstehen ist eine Temperatur nahe beim Akku, die repräsentativ für die Temperatur des Akkus selber ist. Diese Temperatur nahe beim Akku kann gemessen werden, indem der Temperatursensor am Akku angebracht, d.h. physisch mit dem Akku verbunden ist. Dabei kann der Temperatursensor den Akku unmittelbar berühren. Oder ein wärmeleitender, nicht gasförmiger Stoff kann zwischen Temperatursensor und Akku angeordnet sein. Dies kann eine wärmeleitende Masse, insbesondere ein wärmeleitender Klebstoff sein. Alternativ kann die Temperatur nahe beim Akku gemessen werden, wobei ein Luftspalt zwischen Akku und Temperatursensor vorliegt. Ein Abstand zwischen Akku und Temperatursensor entsprechend dem Luftspalt beträgt vorzugsweise weniger als hundert Millimeter, insbesondere weniger als zehn Millimeter, insbesondere weniger als drei Millimeter. Wenn der Akku in einem Gehäuse angeordnet ist, kann die Umgebungstemperatur des Akkus gleich einer Innentemperatur des Gehäuses sein, und es reicht zur Messung der Temperatur aus, wenn der Temperatursensor zusammen mit dem Akku in dem Gehäuse angeordnet ist.

Somit führen die Leitungen zur Steuerung der LED wie auch zum Auslesen des Temperatursensors über die gleichen Verbindungen. Insbesondere sind die Leitungen zur Steuerung der Status-LED parallel zu den Leitungen zum Temperatursensor geschaltet.

Die Erfindung realisiert damit eine Temperaturmessung eines Akkus, welcher in einer Einzelbatterie-Notleuchte eingebaut ist oder in Kombination mit dieser verwendet wird. Je nach Akku-Technologie kann damit aus Sicherheitsgründen der Ladestrom des Akkus unterbrochen werden, sobald die Umgebungstemperatur des Akkus ausserhalb eines bestimmten Bereichs liegt. In einer Einzelbatterie-Notleuchte ist es ausserdem erforderlich, Zustände optisch anzuzeigen. Meistens wird diese Forderung mit einer zweifarbigen rot-grün Leuchtdiode (einer so genannten Status-LED) erfüllt.

Die Erfindung wird realisiert durch eine Verdrahtung eines Temperatursensors mit einer beispielsweise zweifarbigen Status-LED, so dass seine Versorgung über die Verbindung zu Steuerung einer der Farben der Status-LED und seine Messung über die Verbindung zur Steuerung der anderen Farbe erfolgt. In einer Art Multiplexverfahren wird die Steuerung der Farbe, welche für die Temperaturmessung verwendet wird, vom Microcontroller zeitweise als Ausgang für die Anzeige der Farbe und zeitweise als Eingang für die Temperaturmessung konfiguriert.

Die Anpassungen der bestehenden Notleuchte sind minimal: Es wird nur die Konfiguration der zweifarbigen rot-grün Status-LED geändert, indem ein Temperatursensor zu dieser Status-LED zugefügt wird.
- Beim Akku muss nichts geändert werden. Der Temperatursensor muss allerdings in der Nähe des Akkus angeordnet oder auf dem Akku befestigt werden, damit seine Umgebungstemperatur gemessen werden kann.
- Bei der elektronischen Steuerung muss nur die Firmware (d.h. die Software des Microcontrollers) geändert werden. Software-Änderungen sind viel einfacher durchzuführen als Hardware-Änderungen wie zum Beispiel der Einbau eines zusätzlichen Steckers (wie bei Lösung 4) oder eines drei- statt zweipoligen Steckers (wie bei Lösung 1).

Da diese zweifarbige rot-grün Status-LED nur als Zubehör betrachtet werden kann, und einfach auszutauschen ist, ist die Erfindung viel einfacher und viel günstiger einzusetzen als alle bisherige Marktlösungen.

Die **Aufrüsteinheit** für eine Statusanzeige und eine Temperaturmessung in einer Notleuchte, weist auf: eine mindestens zwei-farbige Status-LED und einen Temperatursensor, wobei die Status-LED
- einen ersten Steueranschluss zum Aktivieren der Status-LED mit einer ersten Farbe und
- einen zweiten Steueranschluss zum Aktivieren der Status-LED mit einer zweiten Farbe und
- einen Referenz-Anschluss der Status-LED aufweist, und der Temperatursensor
- einen Versorgungs-Anschluss und
- einen Mess-Anschluss und
- einen Referenz-Anschluss des Temperatursensors aufweist,
   und wobei
   - der erste Steueranschluss der Status-LED mit dem Mess-Anschluss des Temperatursensors und weiter mit einem ersten Anschluss der Aufrüsteinheit verbunden ist,
   - der zweite Steueranschluss der Status-LED mit dem Versorgungs-Anschluss des Temperatursensors verbunden ist, und weiter mit einem zweiten Anschluss der Aufrüsteinheit verbunden ist,
   - der Referenz-Anschluss der Status-LED mit dem Referenz-Anschluss des Temperatursensors und einem gemeinsamen Referenz-Anschluss der Aufrüsteinheit verbunden ist.

Weitere bevorzugte Ausführungsformen gehen aus den abhängigen Patentansprüchen hervor.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Fig. 1: eine Kombination einer Status-LED mit einem Temperatursensor;
- Fig. 2: eine Anordnung derselben in einer Notleuchte;
- Fig. 3: einen Signalverlauf in einem ersten Betriebszustand; und
- Fig. 4: einen Signalverlauf in einem zweiten Betriebszustand.

Grundsätzlich sind in den Figuren gleiche oder gleich wirkende Teile mit gleichen Bezugszeichen versehen.

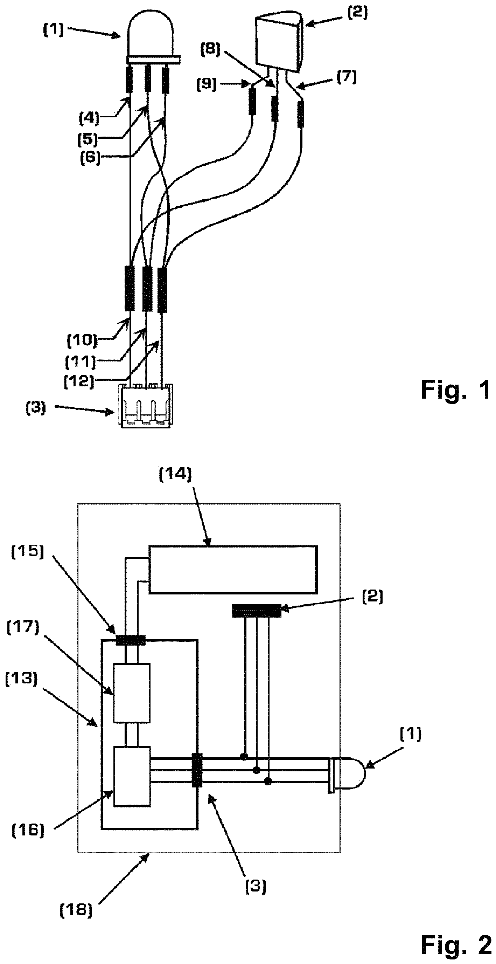

**Fig. 1** zeigt eine Topologie von Verbindungen zwischen einer Status-LED (1), einem Temperatursensor (2) und einem Stecker einer Steckverbindung (3) zum Anschluss an eine Steuerung (16).

Die Status-LED (1) ist als LED mit drei Anschlussdrähten dargestellt und wird über diese drei Anschlussdrähte gesteuert. Fliesst ein Strom zwischen einem ersten Steueranschluss (4) und einem Referenz-Anschluss (5), wobei der Referenz-Anschluss (5) auf eine Referenz- oder Grundspannung geführt ist, leuchtet die LED rot. Fliesst ein Strom zwischen dem zweiten Steueranschluss (6) und dem Referenz-Anschluss (5), leuchtet die LED grün.

Der Temperatursensor (2) ist auch als elektronisches Bauteil mit drei Anschlussdrähten dargestellt. Dieses Bauteil wird über einen Versorgungs-Anschluss (9) versorgt, wobei ein Referenz-Anschluss (7) auf die Referenz- oder Grundspannung geführt ist. Die gemessene Temperatur kann über einen Mess-Anschluss (8) je nach Technologie des Temperatursensors als digitales oder analoges Signal gemessen werden.

Die beiden Bauteile LED (1) und Temperatursensor (2) sind miteinander zu einer Kombination verbunden, wobei
- der erste Steueranschluss (4) (für die rote Farbe) der LED mit dem Mess-Anschluss (8) des Temperatursensors und weiter mit einem ersten Anschluss (10) der Kombination verbunden ist,
- der zweite Steueranschluss (6) (für die grüne Farbe) der LED mit dem Versorgungs-Anschluss (9) des Temperatursensors verbunden ist, und weiter mit einem zweiten Anschluss (11) der Kombination verbunden ist,
- die Referenz-Anschlüssen (5) und (7) beider Bauteile miteinander und einem gemeinsamen Referenz-Anschluss (12) der Kombination verbunden sind.

Die derart verschaltete Kombination von LED (1) und Temperatursensor (2) kann als Aufrüsteinheit für eine Notleuchte eingesetzt werden.

Die Verbindungen zwischen den Bauteilen LED (1) und Temperatursensor (2) sind als zusammengelötete isolierte Drähte dargestellt, alternativ können sie auch mit einer anderen Verbindungstechnik, beispielsweise Klemmen, wie Schraub- oder Federklemmen, realisiert werden.

Die Verbindungen zum Mikrocontroller können über entsprechende Anschlüsse 10, 11, 12 der Aufrüsteinheit geschehen. Die Anschlüsse sind vorzugsweise mechanisch wiederholt herstellbare und lösbare Verbindungen, insbesondere Steck- oder Klemmverbindungen.

Der Anschluss des ersten Anschlusses (10) und zweiten Anschlusses (11) und Referenz-Anschlusses (12) der Aufrüsteinheit an die elektronische Steuerung der Notleuchte erfolgt beispielsweise über einen Steckverbinder (3), wobei die drei jeweils miteinander verbundenen Drähte direkt auf die Platine oder über eine Klemme geführt werden könnten. Dabei sind die folgenden Konfigurationen möglich:
- Ein Stecker der Aufrüsteinheit ist in eine Buchse der Steuerung 13 einsteckbar. Die Buchse kann an einem Gehäuse der Steuerung 13 oder an einer Platine des Microcontrollers 16 eingesteckt sein.
- Drei Anschlussdrähte der Aufrüsteinheit sind in eine Klemmleiste oder einzelne Klemmen der Steuerung 13 einsteckbar. Die Klemmleiste oder einzelne Klemmen kann an einem Gehäuse der Steuerung 13 oder an einer Platine des Microcontrollers 16 angeordnet sein. Die Klemmleiste kann Schraub- oder Federkontakte aufweisen.
- Drei Anschlussdrähte der Aufrüsteinheit sind in anstelle von Anschlussdrähten der Status-LED mit Anschlüssen der Steuerung 13, insbesondere auf einer Platine des Microcontrollers 16, verlötet.

In dieser Beschreibung wird die zweifarbige rot-grüne Status-LED so verdrahtet, dass der Anschluss für die Erzeugung der grünen Farbe zur Versorgung des Temperatursensors bzw. der Anschluss für die rote Farbe zur Messung der Temperatur verwendet wird. Es können die Anschlüsse auch umgekehrt verwendet werden.

**Fig. 2** zeigt eine Notleuchte (18) mit der in **Fig. 1** gezeigten Kombination aus Status-LED (1) und Temperatursensor (2), welche über den Steckverbinder (3) mit der elektronischen Steuerung (13) verbunden ist. Um die Beschreibung der Erfindung zur vereinfachen, sind in **Fig. 2** nur die elektronische Steuerung (13) und der Akku (14) dargestellt. Aus dem gleichen Grund sind in der elektronischen Steuerung (13) nur das Ladegerät (17) und der Microcontroller (16) gezeichnet. Alle andere Bauteile der Notleuchte, welche zu ihrer Funktionalität dienen und eingebaut sind, sind nicht dargestellt. Der Akku (14) wird über den Steckverbinder (15) mit der elektronischen Steuerung (13) verbunden.

Die Status-LED (1) wird zum Teil ausserhalb der Notleuchte (18) angezeigt, da die Anzeige von aussen her sichtbar sein muss. Der Temperatursensor (2) wird am Akku (14) oder in der Nähe des Akkus (14) angeordnet, um dessen Umgebungstemperatur zu messen. Der Temperatursensor (2) kann auch auf den Akku (14) geklebt oder in anderer Weise am Akku (14) befestigt werden. Die Umgebungstemperatur des Akkus wird vom Temperatursensor (2) in ein analoges oder digitales Signal umgewandelt und vom Microcontroller (16) ausgewertet. Liegt diese außerhalb des zulässigen Temperaturbereichs, wird das Ladegerät (17) abgeschaltet.

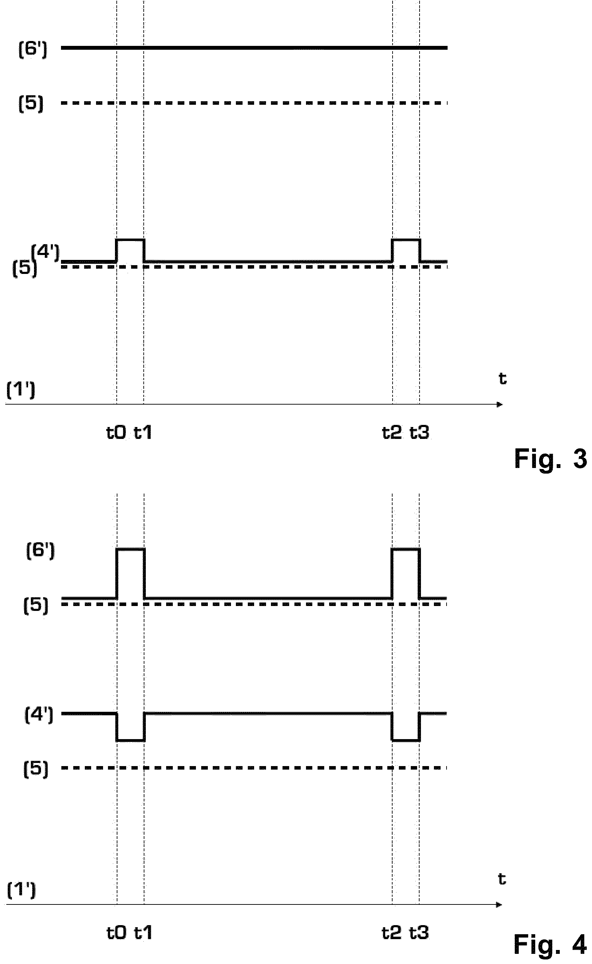

Wenn die Statusanzeige durchgehend grün leuchtet, was normalerweise einen fehlerfreien Zustand anzeigt, ist ein möglicher Verlauf der "roten" (4') und "grünen" (6') Signale, im Folgenden auch erste Signale (4') und zweite Signale (6') oder Spannungen genannt, welche auf dem ersten Steueranschluss (4) bzw. dem zweiten Steueranschluss (6) der zweifarbigen Status-LED auftreten, in **Fig. 3** skizziert.

Auf der Zeitachse (1') sind folgende Zeitpunkte aufgezeichnet: t0, t1, t2 und t3. Zwischen den Zeitpunkten t0 und t1 bzw. t2 und t3 werden Temperaturmessungen durchgeführt. Diese Messungen können in der Regel innerhalb von 100ms elektronisch durch den Microcontroller (16) durchgeführt werden. Dies ist für einen Betrachter unauffällig. Diese Messungen werden in regelmäßigen Abständen durchgeführt, typischerweise in regelmässigen Zeitabständen, d.h. periodisch. In der Regel beträgt das Zeitintervall (t2 - t1) zwischen den Messungen 10s, da die Umgebungstemperatur des Akkus eher träge ist und sich nur langsam ändert.

Die Spannung des Signals (6') in Bezug auf die Grundspannung (5) ist die Durchlassspannung der grünen LED, wenn ihr Strom den vom Microcontroller (16) gesteuerten Wert erreicht hat. In der **Fig. 3** ist die Spannung (6') konstant, da der angezeigte Zustand dauerhaft grün ist. Die Durchlassspannung (6') der grünen LED ist gleichzeitig die Versorgungsspannung (9) des Temperatursensors (2). Dementsprechend muss diese Spannung mit der Technologie resp. Spezifikationen des Temperatursensors bezüglich Betriebsspannung kompatibel sein.

Vor dem Zeitpunkt t0, nach dem Zeitpunkt t3 sowie zwischen den Zeitpunkten t1 und t2, wird die rote LED vom Microcontroller (16) abgeschaltet. Entsprechend wird der erste Steueranschluss (4) der roten LED, genauer gesagt, ein entsprechender Anschluss des Microcontrollers vom Microcontroller (16) als Ausgang konfiguriert und auf null programmiert, so dass kein Strom in die rote LED fliesst. Zwischen den Zeitpunkten t0 und t1 sowie zwischen t2 und t3 wird der erste Steueranschluss (4) der roten LED vom Microcontroller (16) als Eingang konfiguriert. Das entsprechende erste Signal (4') wird dann vom Temperatursensor (2) erzeugt und entspricht der Umgebungstemperatur des Akkus (14). Je nach verwendeter Sensortechnologie kann dieses Signal digital oder analog sein. Auf der Fig. 3 ist ein analoges Signal dargestellt.

Auf der **Fig. 3** sind nur 2 Messzyklen gezeichnet. Es werden jedoch regelmässig Temperaturmessungen, beispielsweise in Zeitintervallen von (t2-t1) durchgeführt, vom Microcontroller (16) gespeichert und zur Auswertung gefiltert.

Wenn die Statusanzeige durchgehend rot leuchtet, was normalerweise einen fehlerhaften Zustand anzeigt, ist ein möglicher Verlauf der roten (4') und grünen (6') Signale, welche auf den Steueranschlüssen (4) bzw. (6) der zweifarbigen Status-LED auftreten, in **Fig. 4** skizziert.

Vor dem Zeitpunkt t0, nach dem Zeitpunkt t3 sowie zwischen den Zeitpunkten t1 und t2, wird die rote LED vom Microcontroller (16) eingeschaltet. Dementsprechend werden der erste und zweite Steueranschluss (4) und (6) der Status-LED vom Microcontroller (16) als Ausgänge konfiguriert und das erste Signal (4') auf eins bzw. das zweite Signal (6') auf null programmiert, so dass ein Strom in die rote LED bzw. kein Strom in die grüne LED fliesst. Es kann auch vorkommen, dass der fehlerhafte Zustand der Notleuchte durch ein regelmässiges oder unregelmässiges Blinkend der roten LED dargestellt wird. In solchen Fällen wird der erste Steueranschluss (4) (der roten LED) vom Microcontroller (16) ebenfalls als Ausgang konfiguriert und je nach gewünschter Blinkfolge auf eins oder null programmiert. Wie im vorherigen Fall mit der kontinuierlichen grünen Statusanzeige kann die Temperaturmessung auf jeden Fall zwischen den Zeiten t0 und t1 und zwischen t2 und t3 durchgeführt werden. Während dieser Zeiträume wird das zweite Signal (6') der grüne LED auf eins programmiert und das erste Signal (4') der roten LED als Eingang konfiguriert, damit der Temperatursensor mit Strom versorgt wird und die Temperatur gemessen werden kann. Da die Status-LED bei den Temperaturmessungen grün leuchtet, ist es wichtig, die Zeiträume der Temperaturmessungen im Vergleich zu den Zeitintervallen zwischen den Messungen sehr kurz zu halten.

Wie in **Fig. 3** ist in **Fig. 4** ein analoges erstes Signal (4') während der Temperaturmessung dargestellt. Je nach Sensortechnologie kann es auch digital sein.

Zusammenfassend wird ein bestehendes Spannungs-Signal, in diesem Fall das erste Signal (4') für zwei Zwecke verwendet. In einer Art Multiplexverfahren wird das Signal (4'), das normalerweise nur zur Steuerung der roten Farbe der Status-LED (1) verwendet, zeitweise für die Temperaturmessung benutzt. Ausgehend von einem bestehenden Gerät mit einer Status-LED (1) muss hardwareseitig lediglich die Art, in welcher die Status-LED (1) angeschlossen ist, geändert werden, indem ein Temperatursensor (2) mit der Status-LED (1) verknüpft und während einer Temperaturmessung über die Status-LED (1) versorgt wird. Zudem muss softwareseitig die Firmware der bestehenden Microcontroller (16) angepasst werden.

Damit ist es möglich, eine bestehende Notleuchte mit minimalem Hardwareaufwand für den Betrieb mit Li-Ion-Akkus aufzurüsten. Hardwareseitig muss lediglich eine Status-LED, die üblicherweise über einen dreipoligen Anschluss an die elektronische Steuerung der Notleuchte angeschlossen ist, durch eine mit dem Temperatursensor verschaltete Status-LED ersetzt werden. Ein zusätzlicher Anschluss an die elektronische Steuerung für den Akku oder für einen Temperatursensor sind nicht erforderlich. An der Steuerung selber muss lediglich die Software angepasst werden. Typischerweise ist diese als Firmware realisiert.

## Patentansprüche

1. Versorgungseinrichtung für eine Notleuchte, aufweisend
- einen Akku (14), dessen Ladestrom unterbrochen werden muss, sobald seine Temperatur ausserhalb eines gewissen Temperaturbereichs liegt,
- eine elektronische Steuerung (13), aufweisend ein Ladegerät (17) für den Akku (14) und einen Microcontroller (16),
- eine mindestens zwei-farbige Status-LED (1), um den Zustand der Notleuchte anhand einer Farbe der Status-LED (1) anzuzeigen, insbesondere während eines Anzeigeintervalls,
- einen Temperatursensor (2), um eine Umgebungstemperatur des Akkus zu messen, insbesondere während eines Messintervalls,
**dadurch gekennzeichnet, dass** der Temperatursensor (2) mit der Status-LED (1) verdrahtet ist, indem ein erster Steueranschluss (4) der Status-LED (1) und ein Mess-Anschluss (8) des Temperatursensors (2) eine erste Verbindung zum Microcontroller (16) gemeinsam nutzen, und ein zweiter Steueranschluss (6) der Status-LED (1) und ein Versorgungs-Anschluss (9) des Temperatursensors (2) eine zweite Verbindung zum Microcontroller (16) gemeinsam nutzen.

2. Versorgungseinrichtung gemäss Anspruch 1
wobei der Microcontroller (16) dazu eingerichtet ist, die erste Verbindung zeitweise, während des Anzeigeintervalls, als Ausgang zur Ansteuerung der Farbe der Status-LED (1) und zeitweise, während des Messintervalls, als Eingang zur Temperaturmessung zu verwenden.

3. Versorgungseinrichtung gemäss Anspruch 1 oder 2,
wobei der Microcontroller (16) dazu eingerichtet ist, die zweite Verbindung zeitweise, während des Anzeigeintervalls, als Ausgang zur Ansteuerung der Farbe der Status-LED (1) und zeitweise, während des Messintervalls, als Ausgang zur Versorgung des Temperatursensors (2) zu verwenden.

4. Versorgungseinrichtung gemäss Anspruch 1 oder 2 oder 3,
wobei das Messintervall weniger als ein Zehntel, insbesondere weniger als ein Hundertstel, insbesondere weniger als ein Tausendstel, insbesondere weniger als ein Zehntausendstel des Anzeigeintervalls beträgt.

5. Versorgungseinrichtung gemäss Anspruch 1 oder 2 oder 3 oder 4,
wobei das Anzeigeintervall mehr als eine halbe Sekunde, insbesondere mehr als eine Sekunde, insbesondere mehr als fünf Sekunden, insbesondere mehr als zehn Sekunden beträgt, insbesondere mehr als zehn Sekunden beträgt.

6. Versorgungseinrichtung gemäss einem der vorangehenden Ansprüche, wobei der Microcontroller (16) dazu eingerichtet ist,
- in einem ersten Betriebszustand den zweiten Steueranschluss (6) der Status-LED (1) und den Versorgungs-Anschluss (9) des Temperatursensors (2) über die zweite Verbindung zu speisen, und mindestens **während des Messintervalls** die erste Verbindung als Eingang zur Temperaturmessung zu verwenden, und
- in einem zweiten Betriebszustand **während des Anzeigeintervalls** den ersten Steueranschluss (4) der Status-LED (1) über die erste Verbindung zu speisen und **während des Messintervalls** den Versorgungs-Anschluss (9) des Temperatursensors (2) über die zweite Verbindung zu speisen und die erste Verbindung als Eingang zur Temperaturmessung zu verwenden.

7. Versorgungseinrichtung gemäss einem der vorangehenden Ansprüche, wobei der Temperatursensor (2) und die Status-LED (1) über einen dreipoligen Anschluss an die elektronische Steuerung angeschlossen sind.

8. Versorgungseinrichtung gemäss Anspruch 7,
wobei der dreipolige Anschluss eine mechanisch wiederholt herstellbare und lösbare Verbindung ist, insbesondere eine Steck- oder Klemmverbindung.

9. **Aufrüsteinheit** (1, 2) für eine Statusanzeige und eine Temperaturmessung in einer Notleuchte, aufweisend eine mindestens zwei-farbige Status-LED (1) und einen Temperatursensor (2),
wobei die Status-LED (1)
• einen ersten Steueranschluss (4) zum Aktivieren der Status-LED (1) mit einer ersten Farbe und
• einen zweiten Steueranschluss (6) zum Aktivieren der Status-LED (1) mit einer zweiten Farbe und
• einen Referenz-Anschluss (5) der Status-LED (1) aufweist,
und der Temperatursensor (2)
• einen Versorgungs-Anschluss (9) und
• einen Mess-Anschluss (8) und
• einen Referenz-Anschluss (7) des Temperatursensors (2) aufweist,
und wobei
• der erste Steueranschluss (4) der Status-LED (1) mit dem Mess-Anschluss (8) des Temperatursensors (2) und weiter mit einem ersten Anschluss (10) der Aufrüsteinheit verbunden ist,
• der zweite Steueranschluss (6) der Status-LED (1) mit dem Versorgungs-Anschluss (9) des Temperatursensors (2) verbunden ist, und weiter mit einem zweiten Anschluss (11) der Aufrüsteinheit verbunden ist,
• der Referenz-Anschluss (5) der Status-LED (1) mit dem Referenz-Anschluss (7) des Temperatursensors (2) und einem gemeinsamen Referenz-Anschluss (12) der Aufrüsteinheit verbunden ist.

10. Versorgungseinrichtung gemäss Anspruch 9,
wobei der erste Anschluss (10), der zweite Anschluss (11) und der Referenz-Anschluss (12) der Aufrüsteinheit mechanisch wiederholt herstellbare und lösbare Verbindung ist, insbesondere eine Steck- oder Klemmverbindung.
